# EUROPÄISCHE PATENTSCHRIFT

(11) **EP 1 657 024 B1**
(45) Veröffentlichungstag und Bekanntmachung des Hinweises auf die Patenterteilung: **30.05.2012**
(21) Anmeldenummer: 03811873.3
(22) Anmeldetag: 12.09.2003
(51) Int. Cl.: B24B 19/08, B24B 9/00, B23Q 15/26, B24B 19/12, B24B 49/00

(54) **VERFAHREN UND VORRICHTUNG FÜR SCHLEIFARBEITEN IN FORM EINES UNRUNDEN DREHKÖRPERS UND NOCKENWELLE**
METHOD AND DEVICE FOR GRINDING WORK IN THE FORM OF NON-CIRCULAR ROTARY BODY, AND CAM SHAFT
PROCEDE ET DISPOSITIF POUR RECTIFIER UNE PIECE SE PRESENTANT SOUS LA FORME D'UN CORPS ROTATIF NON CIRCULAIRE, ET ARBRE A CAMES

(30) Priorität: 26.11.2002 JP 2002341987
(43) Veröffentlichungstag der Anmeldung: 17.05.2006
(73) Patentinhaber: Musashi Seimitsu Industry Co., Ltd., Toyohashi-shi, Aichi 441-8560 (JP)
(72) Erfinder: MURAI, Fukuo, Musashi Seimitsu Industry Co., Ltd., Toyohashi-shi, Aichi 441-8560 (JP)
(74) Vertreter: Rupp, Christian
(86) Internationale Anmeldenummer: PCT/JP2003/011674
(87) Internationale Veröffentlichungsnummer: WO 2004/048035

(56) Entgegenhaltungen:
- JP-A- 8 118 208
- JP-A- 9 160 619
- JP-A- 9 300 193

## Beschreibung

### Gebiet der Erfindung

Die vorliegende Erfindung bezieht sich auf eine Verbesserung bei einem Verfahren zum Schleifen eines Werkstücks für einen nichtkreisförmigen Drehkörper zum Schleifen der äußeren Umfangsfläche des Werkstücks durch einen Drehschleifstein, der durch eine NC-Steuerung in Abhängigkeit vom Profil des Werkstücks vorgeschoben und zurückgeschoben wird, während das Werkstück für den nichtkreisförmigen Drehkörper um seine Achse gedreht wird, und sie bezieht sich auch auf eine Vorrichtung zum Schleifen eines Werkstücks für einen nichtkreisförmigen Drehkörper, die eine Werkstückdreheinrichtung zum Drehen des Werkstücks für den nichtkreisförmigen Drehkörper um die Achse aufweist, während das Werkstück gelagert ist, einen Drehschleifstein, der in der Lage ist, eine äußere Umfangsfläche des Werkstücks zu schleifen, eine Schleifsteindreh- und Hin- und Her-Bewegungseinrichtung, welche in der Lage ist, in Bezug auf die äußere Umfangsfläche des Werkstücks vorgeschoben und zurückgezogen zu werden, während der Drehschleifstein drehbar angetrieben wird, eine Standardphasen-Messeinrichtung zum Messen einer Standardphase des Werkstücks, und eine NC-Steuereinheit, um den Drehschleifstein vorzuschieben und zurückzuziehen, um die äußere Umfangsfläche des Werkstücks auf der Basis der Standardphase des Werkstücks, die durch die Standardphasen-Messeinrichtung gemessen wird, und der vorherigen Eingabe von Daten für das Profil des Werkstücks zu schleifen.

### Technischer Hintergrund

Dieses Verfahren und diese Vorrichtung zum Schleifen eines nichtkreisförmigen Drehkörperwerkstücks ist schon bekannt, wie beispielsweise in Patent-Dokumente 1 und 2 offenbart ist.
[Patent-Dokument 1]
   Japanische offengelegte Patentanmeldung Nr. 9-300 193

Bei diesem Drehkörperschleifverfahren für dieses nichtkreisförmige Werkstück und für die Vorrichtung ist es erforderlich, dass die Standardphase des Werkstücks zunächst gemessen wird, wenn die äußere Umfangsfläche des Werkstücks für den nichtkreisförmigen Drehkörper zu schleifen ist. Daher ist es allgemeine Praxis, dass eine Ausnehmung zum Anzeigen der Standardphase vorher in der äußeren Umfangsfläche während der Herstellung des Werkstücks gebildet wird, und ein bewegbares Element eines Standardphasensensors, welches an einem vorgegebenen Punkt beim Schleifen angeordnet wird, in die Ausnehmung eingesetzt ist, wodurch die Standardphase des Werkstücks gemessen wird.

Um jedoch das bewegbare Element des Standardphasensensors in die Ausnehmung einzusetzen, muss eine Einsetzlücke zwischen der Ausnehmung und dem Sensor vorgesehen sein, wobei dies eine Ursache einer Reduktion der Genauigkeit des Messens der Standardphase des Werkstücks ist. Die Reduktion in der Messgenauigkeit zwingt zu einem Anstieg der Schleifabweichung des Werkstücks, und als Folge davon ist es schwierig, die Schleifzeit abzukürzen.
[Patent-Dokument 2]
   Japanische offengelegte Patentanmeldung Nr. 9- 160619

Bei einem Verfahren und einer Vorrichtung zum Schleifen eines Werkstücks für einen nicht-kreisförmigen Drehkörper, beispielsweise einer Nockenwelle lehrt das oben-beschriebene Dokument, dass eine Ausnehmung oder ein Ansatz als Standardphasenposition in einem Werkstück gebildet wird, welches einem Schleifvorgang unterworfen wird, und die Ausnehmung oder der Ansatz durch einen Positionssensor ermittelt wird, und anstelle der Bereitstellung einer Position als eine Standardphase ein Phasenwinkel, bei dem das Sensorausgangssignal maximal ist, unter Verwendung der maximalen Erstreckung des Werkstücks als eine Standardphase oder ein Phasenwinkel, wenn der Sensorausgangssignalwert während der Ermittlung der maximalen Erstreckung ansteigt und zu einem vorher festgelegten Wert wird und ein Phasenwinkel, wenn der Sensorausgangssignalwert abnimmt und zu einem vorher festgelegten Wert wird, gelesen werden, und ein Mittelwert zwischen diesen beiden Werten als eine Standardphase verwendet wird. Mittels dieses Ermittlungsverfahrens ist es schwierig, die maximale Erstreckung zu ermitteln, und der Betrieb zum Ermitteln des Mittelwerts zwischen den beiden Werten ist schwierig. Außerdem verursacht eine Vorrichtung für diese Ermittlung unausweichlich einen Anstieg der Kosten aufgrund der Bereitstellung einer Ausnehmung oder eines Ansatzes als eine Standardposition und eine Schwierigkeit bei Verfahrensschritten der Ermittlung.

### Offenbarung der Erfindung

Folglich wurde die vorliegende Erfindung im Hinblick auf die obigen Umstände getätigt, und es ist eine Aufgabe der vorliegenden Erfindung, einen Werkstückschleifprozess und ein Verfahren für einen nichtkreisförmigen Drehkörper der oben beschriebenen Art bereitzustellen, wobei sogar, wenn eine spezielle Ausnehmung in einem äußeren Umfang eines Werkstücks für einen nichtkreisförmigen Drehkörper nicht gebildet wird, das Messen der Standardphase des Werkstücks genau erzielt werden kann, wodurch eine Reduktion der Schleifabweichung des Werkstücks ermöglicht wird, wodurch somit die Schleifzeit abgekürzt wird, und eine Nockenwelle bereitzustellen, welche eine gute Erscheinungsform hat und die von einem Nockenwellenrohling gebildet wird, dessen Fabrikation vereinfacht ist.

Um die obige Aufgabe zu lösen, wird gemäß einem ersten Gesichtspunkt und Merkmal der vorliegenden Erfindung ein Verfahren zum Schleifen einer Nockenwelle nach Anspruch 1 vorgeschlagen.

Mit dem ersten Merkmal kann, sogar wenn eine räumliche Ausnehmung nicht in dem äußeren Umfang des Werkstücks für den nichtkreisförmigen Drehkörper gebildet wird, das Messen der Standardphase des Werkstücks genau erzielt werden, wodurch eine Reduktion der Schleifabweichung des Werkstücks erreicht wird, wodurch somit die Schleifzeit abgekürzt wird. Außerdem kann der vorher festgelegte Hubbetrag genau bei einem bestimmten Punkt vom Basiskreisteil zum Nockenbuckel des Werkstücks ermittelt werden, und das Messen der Standardphase des Werkstücks kann genauer erreicht werden.

Gemäß einem zweiten Gesichtspunkt und Merkmal der vorliegenden Erfindung wird eine Vorrichtung zum Schleifen einer Nockenwelle nach Anspruch 2 bereigestellt.

Die Werkstückdreheinrichtung entspricht einem ersten Elektromotor 8 in jeder der Ausführungsformen der vorliegenden Erfindung, die anschließend beschrieben wird, und die Schleifsteindreh- und Hin- und Her-Bewegungseinrichtung entspricht einem dritten Elektromotor 18 und einer bewegbaren Antriebseinrichtung 12.

Mit dem zweiten Merkmal kann sogar, wenn eine Spezialausnehmung nicht in dem äußeren Umfang des Werkstücks gebildet ist, das Messen der Standardphase des Werkstücks durch den Standardphasensensor genau erzielt werden, wodurch eine Reduktion der Schleifabweichung des Werkstücks erreicht wird, wodurch somit die Schleifzeit abgekürzt wird. Außerdem kann ein vorher festgelegter Hubbetrag bei einem bestimmten Teil vom Basiskreisteil zum Nockenbuckel des Werkstücks durch den Standardphasensensor genau ermittelt werden, und das Messen der Standardphase des Werkstücks kann genauer erreicht werden.

Die obigen und weiteren Aufgaben, Merkmale und Vorteile der Erfindung werden aus der vorliegenden Beschreibung der bevorzugten Ausführungsformen in Verbindung mit den beiliegenden Zeichnungen deutlich werden.

### Kurzbeschreibung der Zeichnungen

Fig. 1 ist eine Vorderansicht einer Nockenwellen-Schleifvorrichtung gemäß Ausführungsformen der vorliegenden Erfindung;
Fig. 2 ist eine vergrößerte Querschnittsansicht längs einer Linie 2-2 in Fig. 1;
Fig. 3 ist eine Querschnittsansicht längs einer Linie 3-3 in Fig. 2;
Fig. 4 ist eine Querschnittsansicht längs einer Linie 4-4 in Fig. 3 (welche einen Nocken zeigt, dessen Standardphase ermittelt wird);
Fig. 5 ist eine vergrößerte Ansicht eines Teils, der durch einen Pfeil 5 in Fig. 1 angedeutet ist (der einen Drehschleifstein zeigt, der gerade bearbeitet wird);
Fig. 6 ist eine Ansicht ähnlich Fig. 3, die jedoch ein Werkstück zeigt, welches gerade zugeschliffen wird;
Fig. 7 ist eine Querschnittsansicht längs einer Linie 7-7 in Fig. 6; und
Fig. 8 ist eine Ansicht ähnlich Fig. 4, welche jedoch eine Modifikation einer Entgratbürste zeigt.

### Bevorzugte Ausführungsart der Erfindung

Die vorliegende Erfindung wird mittels bevorzugter Ausführungsformen in Bezug auf die beiliegenden Zeichnungen beschrieben.

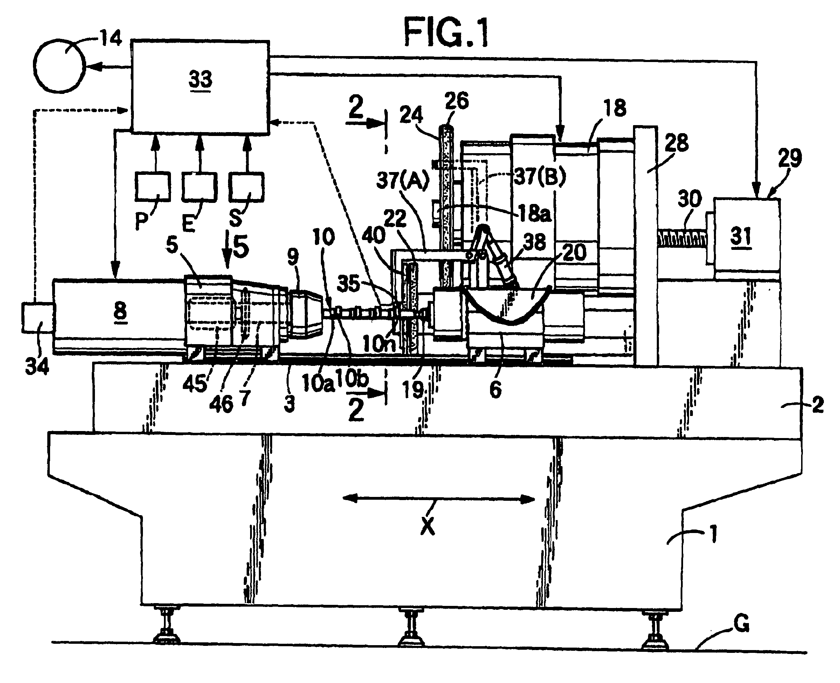

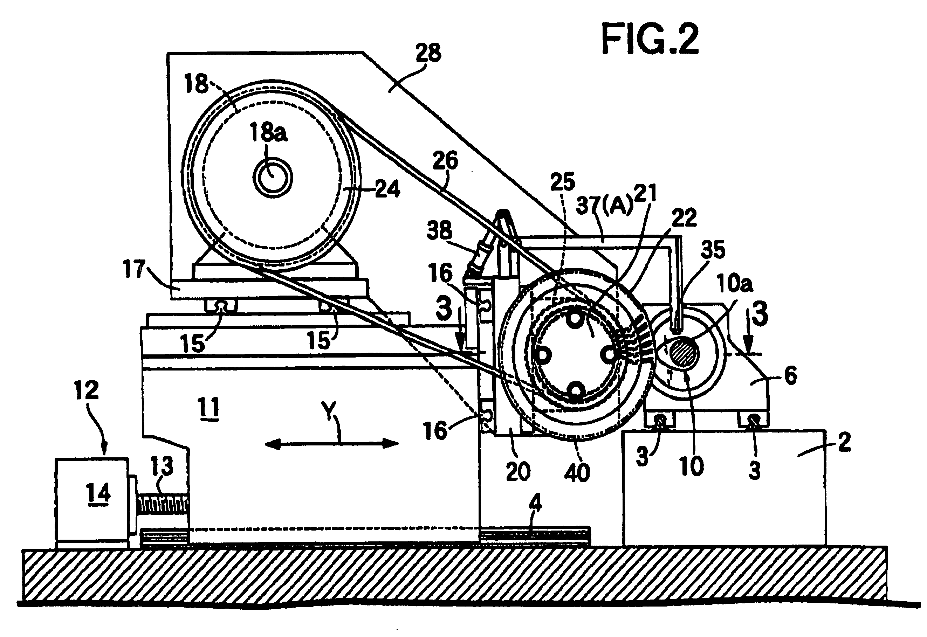

Unter Bezug zunächst auf Fig. 1 und 2 ist eine X-Richtung-Schiene 3 auf einem Tisch 2 auf einem Bearbeitungsbasisteil 1 gebildet, welche auf einem Boden G angeordnet ist, die sich in einer X-Richtung erstreckt, und eine Y-Richtung-Schiene 4 ist auf einer oberen Fläche des Bearbeitungsbasisteils 1 gebildet, die sich in einer Y-Richtung senkrecht zur X-Richtung erstreckt. Ein Spindelstock 5 und ein Reitstock 6 sind auf der X-Richtungsschiene 3 befestigt, so dass sie sich zu und weg voneinander bewegt werden können. Eine Hauptspindel 7 ist im Spindelstock 5 gelagert, und ein erster Elektromotor 8 zum Drehen der Hauptspindel 7 ist am Spindelstock 5 befestigt und mit dem anderen Ende der Hauptspindel 7 verbunden. Ein Spannfutter 9 ist an einem inneren Ende der Hauptspindel 7 befestigt.

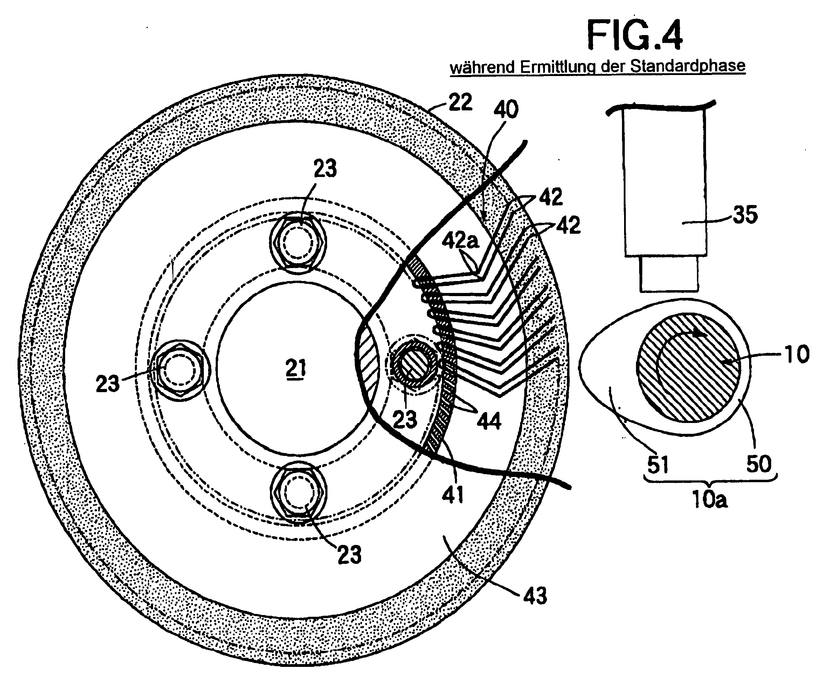

Der Tisch 2 ist mit einem Reitstock 19 versehen, um ein Werkstück 10 für einen nichtkreisförmigen Drehkörper durch Zusammenwirkung mit dem Spannfutter 9 des Spindelstocks 9 zu lagern. Das Werkstück 10 für den nichtkreisförmigen Drehkörper ist eine ventilbetätigende Nockenwelle in einer Mehrzylindermaschine in dem Fall des gezeigten Beispiels, und besitzt mehrere Nocken 10a, 10b, ... 10n, welche in vorher festgelegten Abständen in einer Axialrichtung angeordnet sind, und von denen jeder einen Basiskreisteil 50, das einen konstanten Krümmungsradius hat, und einen Nockenbuckel 51 aufweist, der zu umfangsmäßig gegenüberliegenden Enden des Basiskreisteils 50 führt (siehe Fig. 4). Die Nocken 10a, 10b, ... 10n sind bezüglich der Phasen voneinander verschieden. Die Nockenwelle 10 ist durch ein Präzisions-Gießverfahren geformt, und die Außenumfangsflächen der mehreren Nocken 10a, 10b, ... 10n müssen zugeschliffen sein.

Ein bewegbarer Tisch 11 ist verschiebbar auf der Y-Richtung-Schiene 4 befestigt, und eine Bewegbar-Tischantriebseinrichtung 12, die in der Lage ist, den bewegbaren Tisch 11 längs der Y-Richtung-Schiene 4 hin- und herzubewegen, ist zwischen dem Tisch 2 und dem bewegbaren Tisch 11 befestigt. Die Bewegbar-Tischantriebseinrichtung 12 besteht aus einer Schraubenwelle 13, welche in der Y-Richtung angeordnet ist und die über ein Gewinde mit dem bewegbaren Tisch 11 in Eingriff steht, und einem zweiten Elektromotor 14, der am Tisch 2 befestigt ist und in der Lage ist, die Schraubenwelle 13 in entgegengesetzten Richtung zu drehen.

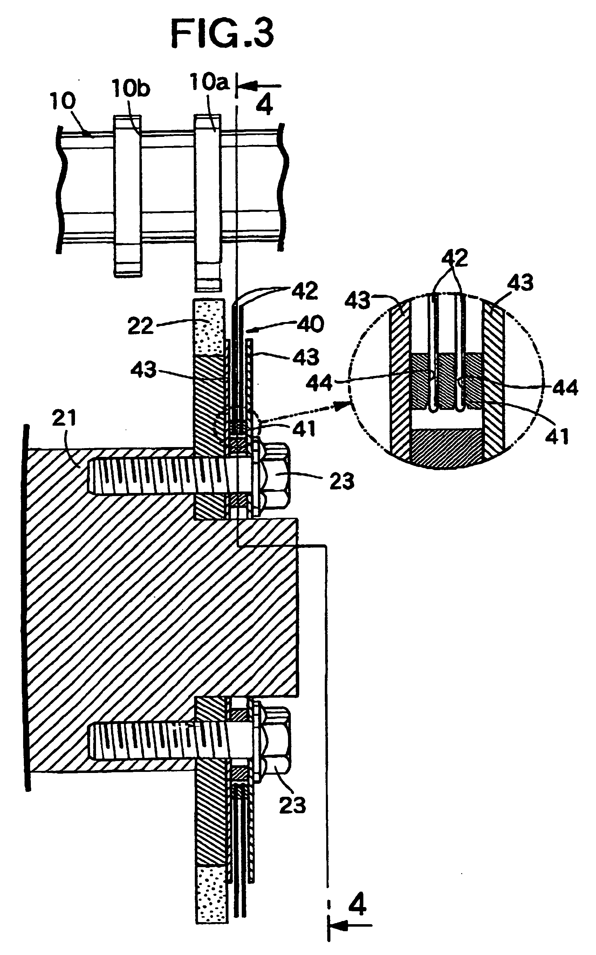

Eine obere Oberflächenschiene 15 und eine Seitenschiene 16 sind an einer oberen Fläche an einer Seite des bewegbaren Tisches 11 gebildet, die sich in der X-Richtung erstrecken, und ein dritter Elektromotor 18 ist mit seiner Abgabewelle 18a, welche in die X-Richtung gedreht ist, auf einem Motorbasisteil 17 befestigt, welches auf der oberen Flächenschiene 15 verschiebbar befestigt ist. Eine Schleifscheibenspindel 21 ist mit ihrer Achse, welche in der X-Richtung gedreht ist, auf einem Schleifscheiben-Spindelstock 20 gelagert, der auf der Seitenschiene 16 verschiebbar befestigt ist, und ein Drehschleifstein 22 zum Schleifen der äußeren Umfangsflächen der Nocken 10a, 10, ... 10n der Nockenwelle 10 nacheinander ist abnehmbar an der Schleifscheibenspindel 21 über mehrere Schrauben 23, 23 gesichert (siehe Fig. 3).

Die Abgabewelle 18a des dritten Elektromotors 18 und die Schleifscheibenspindel 21 sind über eine Antriebsriemenscheibe 24 und eine getriebene Riemenscheibe 25, die an der Abgabewelle 18a bzw. der Schleifscheibenspindel 21 fixiert sind, und über einen Riemen 26, der um die Riemenscheiben 24 und 25 gewickelt ist, miteinander verbunden, so dass der dritte Elektromotor 18 die Schleifscheibenspindel 21 durch seine Abgabewelle drehbar antreibt.

Das Motorbasisteil 17 und der Schleifscheibenspindelstock 20 sind über einen Verbindungsblock 28 integriert miteinander verbunden, so dass sie simultan auf der oberen Flächenschiene 15 und der Seitenschiene 16 gleiten können. Eine Verbindungsblock-Antriebseinrichtung 29, die in der Lage ist, den Verbindungsblock 28 längs der oberen Flächenschiene 15 und der Seitenschiene 16 hin- und herzubewegen, ist zwischen dem Verbindungsblock 28 und dem bewegbaren Tisch 11 befestigt. Die Verbindungsblock-Antriebseinrichtung 29 besteht aus einer Schraubenwelle 30, welche in der X-Richtung angeordnet ist und die über Gewinde mit dem Verbindungsblock 28 in Eingriff steht, und ein vierter Elektromotor 31 ist am bewegbaren Tisch 11 befestigt und in der Lage, die Schraubenwelle 30 in entgegengesetzten Richtungen zu drehen.

Eine NC-Steuereinheit 33 ist auf dem Maschinenbasisteil 1 befestigt. Der NC-Steuereinheit 33 werden ein Ermittlungssignal von einem Nockenwellen-Drehpositionssensor 34, der auf dem ersten Elektromotor 8 befestigt ist, um die Drehposition der Nockenwelle 10 von der Drehposition der Hauptspindel 7 zu messen, und ein Ermittlungssignal vom Standardphasensensor 35, um die Standardphase der Nocke 10a in einer vorher festgelegten Position (der äußerste Nocken 10a am engsten zum Spindelstock 5 im gezeigten Beispiel) zu messen, zusätzlich zu Profildaten P der Nocken 10a, 10b, ... 10n auf der Nockenwelle 10, Daten E der Phasendifferenz zwischen den Nocken 10a, 10b, ... 10n sowie Daten S der axialen Abstände zwischen den Nocken 10a, 10b, ... 10n zugeführt. Die NC-Steuereinheit steuert die Arbeitsweise des ersten bis vierten Elektromotors 8, 14, 18 und 31 auf der Basis dieser Signale und Daten.

Der Standardphasensensor 35 ist an einem Kopfende des Sensorlagerarms 37 befestigt, der verschwenkbar auf dem Schleifscheiben-Spindelstock 20 gelagert ist. Der Sensorbefestigungsarm 37 ist in der Lage, zwischen einer Ermittlungsposition A, bei der der Standardphasensensor 35 der äußeren Umfangsfläche des äußersten Nockens 10a am engsten zum Spindelstock 5 gegenüberliegt, und einer Ruheposition B, bei der der Sensor 35 von der Nockenwelle 10 beabstandet ist, verschwenkt zu werden. Ein elektro-magnetisches oder elektrisches Betätigungsorgan 38 ist mit dem Sensorlagerarm 37 verbunden, um den Sensorlagerarm 37 zwischen den beiden Positionen A und B zu verschwenken.

Wenn sich der Nocken 10a vom Basiskreisteil 50 in Richtung auf den Nockenbuckel 51 in Bezug auf den Standardphasensensor 35 gedreht hat, ermittelt der Standardphasensensor 35 einen vorher festgelegten Hubbetrag des Nockens 10a zwischen dem Basiskreisteil 50 und dem Nockenbuckel 51, und das Ermittlungssignal des Standardphasensensors 35 wird als ein Signal, welches die Standardphase des Nockens 10a zeigt, der NC-Steuereinheit 33 zugeführt. Die Art des Standardphasensensors 35, die verwendet werden kann, kann ein kontaktloser Sensor oder ein Kontakt-Sensor sein.

Wie in Fig. 3 und 4 gezeigt ist, ist eine Entgratbürste 40 an der Schleifscheibenspindel 21 benachbart zum Drehschleifstein 22 befestigt. Die Entgratbürste 40 besteht aus einem ringförmigen Bürstenkörper 41, einer großen Anzahl von Metalldrähten 42, 42 als Bürstenelementdrähte, welche im Bürstenkörper 41 eingebettet sind, und zwei paarweise angeordneten Drahtschutzplatten 43, 43, die gegenüberliegenden Seiten der Drähte 42, 42 gegenüberliegen, wobei sie den Bürstenkörper 41 dazwischen einklemmen. Der Bürstenkörper 41 und die Drahtschutzplatten 43, 43 sind an der Schleifscheibenspindel 21 gemeinsam mit dem Drehschleifstein 22 über die Schrauben 23, 23 gesichert.

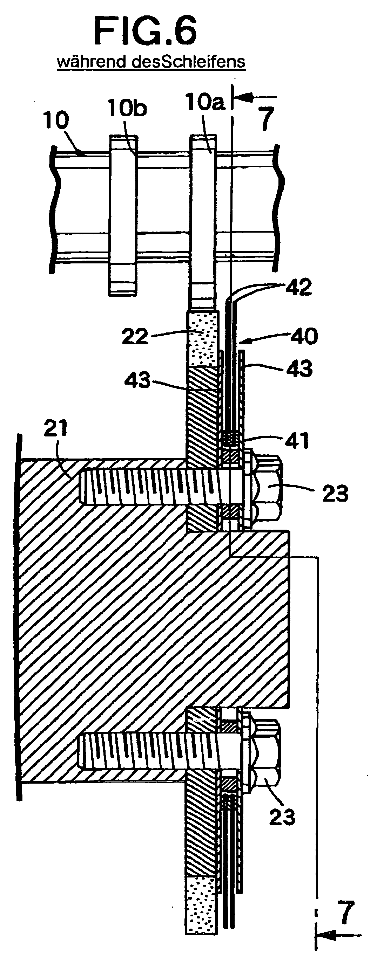

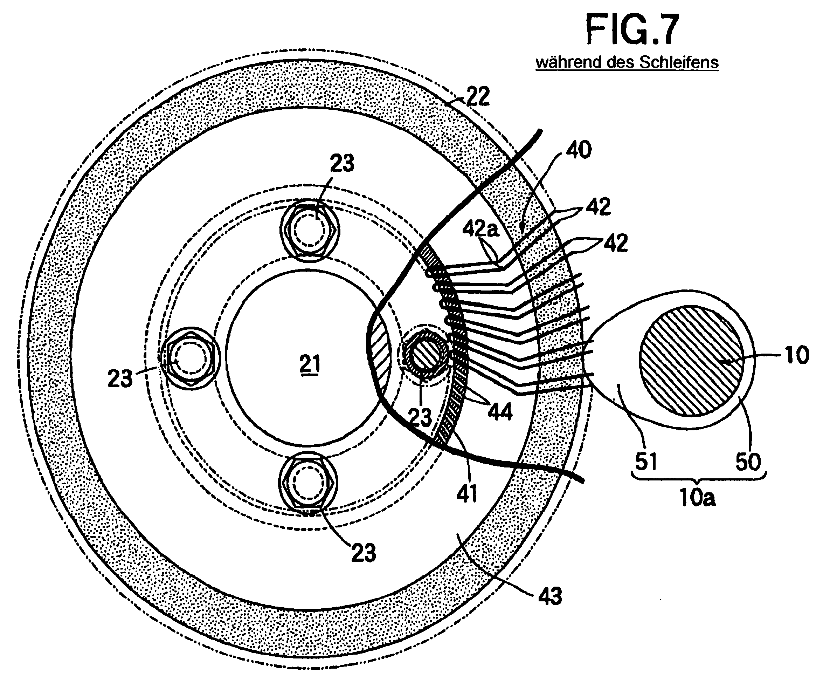

Um die Drähte 42, 42 einzubetten, sind eine große Anzahl von Durchgangsbohrungen 44, 44 axial in mehreren Reihen im Bürstenkörper 41 hergestellt und am Umfang des Bürstenkörpers 41 angeordnet, und zwei Kopfenden der Drähte 42, 42, die jeweils paarweise am zentralen Teil gefaltet sind, sind durch die jeweils zwei umfangs- oder axial-benachbarten Durchgangslöcher 44, 44 von der Seite des inneren Umfangs des Bürstenkörpers 41 eingeführt, und jeder der Drähte 42 ist in jedem der Durchgangsbohrungen 44 durch Kleben verbunden oder verklammert. Jeder der Drähte 42 erstreckt sich radial nach außen vom Bürstenkörper 41 und besitzt ein ∧-gebogenes Teil 42a. Wenn die Schleifscheibenspindel 21 in einem Haltezustand oder in einem Niedriggeschwindigkeits-Drehzustand ist, in welchem sie mit einer niedrigen Geschwindigkeit gedreht wird, die niedriger ist als die übliche Schleifdrehgeschwindigkeit, ist das Kopfende jedes Drahts 42 an einer Stelle radial innerhalb der äußeren Umfangsfläche des Drehschleifsteins 22 positioniert, jedoch, wenn die Drehgeschwindigkeit der Schleifscheibenspindel 21 vergrößert wird, um sich der üblichen Schleifdrehgeschwindigkeit zu nähern, wird der gebogene Bereich 42a durch eine Zentrifugalkraft gestreckt, so dass zugelassen wird, dass das Kopfende des Drahts radial nach außen von der äußeren Umfangsfläche des Drehschleifsteins 22 ragt (Fig. 6 und 7). Auf diese Weise wird die Entgratbürste zu einer Bürste mit veränderbarem Durchmesser gebildet, bei der deren Außendurchmesser, d.h., der Außendurchmesser der Gruppe der Drähte 42, 42 vermindert werden kann, damit er kleiner ist, oder erhöht werden kann, damit er größer ist als der Außendurchmesser des Drehschleifsteins 22.

Jeder der Drähte 42 kann zu einer Zickzack-Form mit mehreren ∧-gebogenen Teilen 42a gebildet sein, die in einer Linie angeordnet sind.

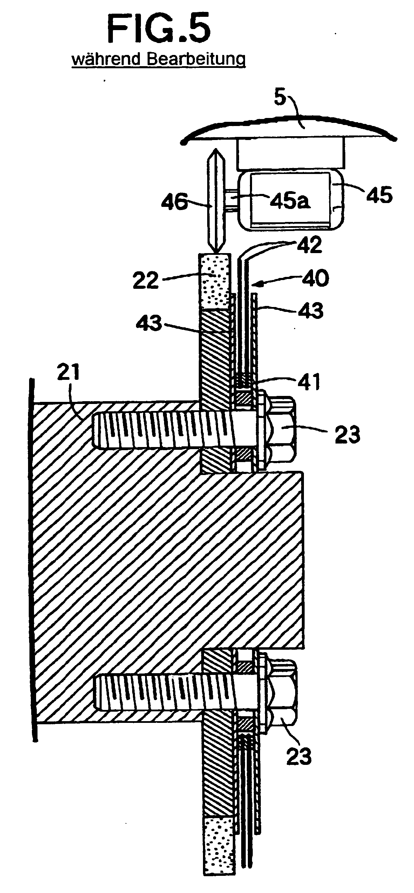

Wie in Fig. 1 und 5 gezeigt ist, ein Bearbeitungsmotor 45 an einer Seite des Spindelstocks 5 enger am bewegbaren Tisch 11 befestigt, wobei dessen Abgabewelle 45a parallel zur Hauptspindel 7 ist, und ein Diamantbearbeitungswerkzeug 46, welches in der Lage ist, den Drehschleifstein 22 zu bearbeiten, ist an der Abgabewelle 45a befestigt.

Die Arbeitsweise der ersten Ausführungsform wird anschließend beschrieben.

Zunächst wird, um die Bearbeitung des Drehschleifsteins 22 auszuführen, die äußere Umfangsfläche des Drehschleifsteins 22, der gemeinsam mit der Schleifscheibenspindel 21 gedreht wird, in Kontakt mit dem Diamantbearbeitungswerkzeug 46 gebracht und axial geführt, während die Schleifscheibenspindel 21 mit einer niedrigen Geschwindigkeit durch den Betrieb des dritten Elektromotors 18 in einem Zustand gedreht wird, bei dem das Diamantbearbeitungswerkzeug 46 mit einer hohen Geschwindigkeit durch den Betrieb des Bearbeitungsmotors 45 gedreht wird, wie in Fig. 5 gezeigt ist.

Während dieser Bearbeitung des Drehschleifsteins 22 ist die Drehgeschwindigkeit der Schleifscheibenspindel 21 relativ niedrig und folglich ist jeder der Drähte 42 der Entgratbürste 40 im zusammengezogenen Zustand, und somit ist der Durchmesser der Entgratbürste 40 kleiner als der des Drehschleifsteins 22. Daher ist es möglich, die Störung der Entgratbürste 40 mit dem Diamantbearbeitungswerkzeug 46 zu verhindern.

Um nun die äußeren Umfangsflächen der mehreren Nocken 10a, 10b, ... 10n der Nockenwelle 10, die durch Präzisions-Gießen gebildet wird, zu schleifen, werden die gegenüberliegenden Enden der Nockenwelle 10 durch das Spannfutter 9 des Spindelstocks 5 und des Reitstocks 19 gelagert. Dann wird der Sensorlagerarm 37 in der Ermittlungsposition A zurückgehalten, und der Standardphasensensor 35 liegt der äußeren Umfangsfläche des äußersten Nockens 10a am engsten dem Spindelstock 5 gegenüber (siehe Fig. 4). Die Nockenwelle 10 wird mit einer sehr niedrigen Geschwindigkeit über das Spannfutter 9 durch den ersten Elektromotor 8 auf dem Spindelstock 5 gedreht. Wenn das Basiskreisteil 50 und der Nockenbuckel 51 des Nockens 10a vorbei bewegt werden vor einem Ermittlungsteil des Standardphasensensors 35 als Antwort auf die Drehung der Nockenwelle 10, ermittelt der Phasensensor 35 den vorher festgelegten Hubbetrag des Nockens 10a, und das Ermittlungssignal wird als das Standardphasensignal an die NC-Steuereinheit 33 ausgegeben. Danach wird der Sensorlagerarm 37 sofort auf die Ruheposition B durch das Betätigungsorgan 38 gedreht, um den Standardphasensensor 35 weg vom Nocken 10a zu bewegen. Somit ist es möglich, zu vermeiden, dass der Standardphasensensor 35 gegenüber einer zerstreuten Schleifflüssigkeit frei liegt.

Wenn das Standardphasensignal an die NC-Steuereinheit 33 vom Standardphasensensor 35 ausgegeben wird, steuert die NC-Steuereinheit 33 den Betrieb des ersten bis vierten Elektromotors 8, 14, 18 und 31 auf der Basis des Signals, welches vom Nockenwellen-Drehpositionssensor 34 und den Daten P, E und S zugeführt wird, die vorher zugeführt werden, um den bewegbaren Tisch 11 in der Y-Richtung hin- und herzubewegen und diesen mit einer sehr niedrigen Geschwindigkeit in der X-Richtung zuzuführen, während der Drehschleifstein 22 mit einer vorher festgelegten Schleifdrehgeschwindigkeit gedreht wird, wodurch die äußere Umfangsfläche des Nockens 10a von einem Ende zum anderen Ende durch den Drehschleifstein 22 zugeschliffen wird.

Während dieses Schleifens hat die Entgratbürste 40, die mit einer relativ hohen Geschwindigkeit gemeinsam mit dem Drehschleifstein 22 gedreht wird, einen Durchmesser, der auf einen größeren als den des Drehschleifsteins 22 vergrößert wird, indem das gebogene Teil 22a eines jeden der Drähte 42 aufgrund einer Zentrifugalkraft gestreckt wird, wie in Fig. 6 und 7 gezeigt ist. Daher bürstet die Entgratbürste 40 die äußere Umfangsfläche des Nockens 10a, unmittelbar nachdem er durch den Drehschleifstein 22 zugeschliffen ist, von einem seiner Endränder in Richtung auf den anderen Endrand. Somit kann ein Schleifgrat, der an einem Endrand des Nockens 10a verbleibt, entfernt werden, und im gleichen Zeitpunkt kann die Zuschleiffläche des Nockens 101 gereinigt werden.

Wenn das Schleifen und das Entgraten des einen Nockens 10a in der oben beschriebenen Weise beendet ist, betätigt die NC-Steuereinheit 33 den vierten Elektromotor 31, um den Verbindungsblock 28 über lediglich die Entfernung zwischen den benachbarten Nocken 10a, 10b, ... 10n in der X-Richtung zu verschieben, wodurch die nächsten Nocken 10b, ... 10n nacheinander und simultan in einer ähnlichen Weise durch den Drehschleifstein 22 und die Entgratbürste 40 zugeschliffen und entgratet werden.

Da der vorher festgelegte Hubbetrag zwischen dem Basiskreisteil 50 und dem Nockenbuckel 51 des Nockens 10a durch den Standardphasensensor 35 ermittelt wird, wodurch die Standardphase des Nockens 10a gemessen wird, wie oben beschrieben, kann das Messen der Standardphase des Nockens 10a genau durchgeführt werden, sogar wenn eine spezielle Ausnehmung nicht um den äußeren Umfang der Nockenwelle 10 herum gebildet ist, wodurch eine Abnahme der Schleifabweichung des Nockens 10a, 10b, ... 10n verschafft wird, wodurch somit die Schleifzeit verkürzt wird.

Das Entgraten schreitet außerdem im Wesentlichen simultan mit dem Schleifen fort, und folglich ist es nicht notwendig, einen speziellen Entgratschritt nach dem Schleifen vorzusehen, und natürlich ist eine ausschließliche Entgrateinrichtung nicht erforderlich. Somit ist es möglich, die Bearbeitungszeit für die Nockenwelle 10 bemerkenswert abzukürzen, um somit eine wesentliche Reduktion der Bearbeitungskosten zu liefern.

Die Entgratbürste 40 ist mit einem variablen Durchmesser ausgebildet, wobei das gebogene Teil 42a auf jedem der Drähte 42 gebildet ist, und kann daher mit einem einfachen Aufbau und niedrigen Herstellungskosten bereitgestellt werden.

Es ist nicht notwendig, eine Ausnehmung zu bilden, um die Standardphase in der äußeren Umfangsfläche der Nockenwelle 10, welche die große Anzahl von Nocken 10a, 10b, ... 10n hat, zu zeigen, welche durch den oben beschriebenen Prozess zugeschliffen sind. Daher ist es möglich, die Fabrikation des Nockenwellenrohteils zu vereinfachen und eine gute Erscheinungsform der Nockenwelle 10 bereitzustellen.

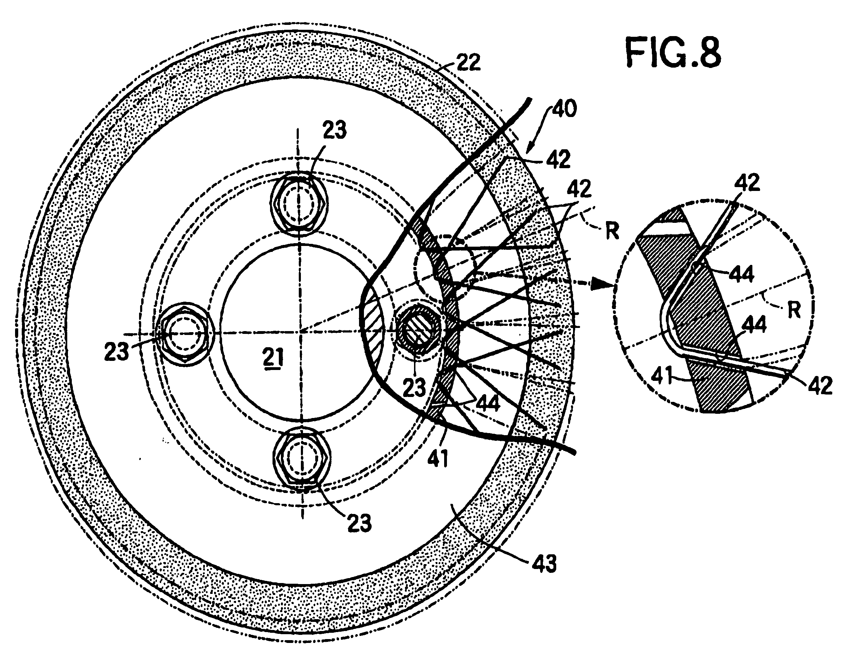

Eine zweite Ausführungsform der vorliegenden Erfindung, die in Fig. 8 gezeigt ist, wird nun beschrieben.

Die zweite Ausführungsform ist gegenüber der vorherigen Ausführungsform hinsichtlich des Aufbaus der Entgratbürste 40 verschieden. Insbesondere sind Durchgangsbohrungen 44, 44 in einem Bürstenkörper 41 hergestellt und umfangsmäßig in einer großen Anzahl von Sätzen angeordnet, wobei die benachbarten beiden Sätze in einer V-Form auf gegenüberliegenden Seiten einer Radiuslinie R angeordnet sind, um ein Paar zu bilden. Zwei Kopfenden eines Drahtes 42, der zu einer V-Form an seinem zentralen Teil gebogen ist, sind durch jedes der Paare der Durchgangsbohrungen 44, 44 von der Seite des inneren Umfangs des Bürstenkörpers 41 eingeführt, und der Draht 42 ist in jeder der Durchgangsbohrungen 44 verklemmt. Der zu einer V-Form gebogene Draht 42 ist in Bezug auf die Radiuslinie R des Bürstenkörpers 41 in seinem freien Zustand geneigt, so dass dessen Kopfende radial innerhalb der äußeren Umfangsfläche des Drehschleifsteins 22 angeordnet ist, wie durch eine durchgezogene Linie in Fig. 8 gezeigt ist. Wenn jedoch die Schleifscheibenspindel 21 in einen vorher festgelegten Hochgeschwindigkeits-Drehzustand gebracht wird, wird es dem Draht 42 erlaubt, dass er in Richtung auf die Radiuslinie R durch eine Zentrifugalkraft anhebt, wie durch eine gestrichelte Linie in Fig. 8 gezeigt ist, so dass dessen Kopfende radial nach außen von der äußeren Umfangsfläche des Drehschleifsteins 22 ragt.

Daher kann das Entgraten eines jeden der Nocken 10a, 10b, ... 10n der Nockenwelle 10 durch die Drähte 42, 42 ausgeführt werden, ohne durch den Drehschleifstein 22 wie bei der vorherigen Ausführungsform gestört zu werden, wenn die Schleifscheibenspindel 21 mit einer hohen Geschwindigkeit gedreht wird. Gemäß dieser Modifikation ist es nicht erforderlich, dass jeder der Drähte 42, 42 zu einer ∧-Form an seinem Zwischenbereich wie bei der vorherigen Ausführungsform gebogen wird, und folglich wird die Entgratbürste 40 mit variablen Durchmesser bezüglich des Aufbaus weiter vereinfacht und kann mit niedrigen Herstellungskosten bereitgestellt werden.

Die Anordnung der anderen Komponenten ist ähnlich der bei der vorherigen Ausführungsform, und folglich sind Teile oder Komponenten, die denjenigen in der vorherigen Ausführungsform entsprechen, mit den gleichen Bezugszeichen und Symbolen in Fig. 8 bezeichnet, so dass auf eine Beschreibung dafür verzichtet wird.

Obwohl die Ausführungsformen der vorliegenden Erfindung ausführlich beschrieben wurden, versteht es sich, dass verschiedene Modifikationen hinsichtlich der Konstruktion durchgeführt werden können, ohne den Rahmen der Erfindung, der in den Ansprüchen definiert ist, zu verlassen. Beispielsweise kann der Standardphasensensor 35 an einem Ort befestigt sein, der anders ist als der Schleifscheiben-Spindelstock 20, beispielsweise der Tisch 2. Bürstenelementdrähte einer Entgratbürste 40, welche aus Kunststoff hergestellt werden, können anstelle der Drähte 42, 42 verwendet werden, die aus Metall hergestellt sind.

## Patentansprüche

1. Verfahren zum Schleifen einer Nockenwelle (10) mit einer Vielzahl an Nocken (10a, 10b --- 10n), die in vorbestimmten Abständen in einer axialen Richtung der Nockenwelle angeordnet sind, das Verfahren eine äußere Umfangsfläche der Nocken (10a, 10b --- 10n) schleift, wobei jede der Nocken ein Basiskreisteil (50) aufweist, welches einen konstanten Krümmungsradius aufweist, und einen Nockenbuckel (51), der zu umfangsmäßig gegenüberliegenden Enden des Basiskreisteils führt, das Schleifen der Nocken durch einen Drehschleifstein (22) realisiert wird, der durch eine NC-Steuerungseinheit (33) in Abhängigkeit vom Profil der Nocken (10a, 10b-10n) vorgeschoben und zurückgezogen wird, während die Nockenwelle (10) um seine Achse gedreht wird,
das Verfahren umfassend:
einen ersten Schritt zum Lagern von gegenüberliegenden Enden der Nockenwelle (10) jeweils durch einen Spindelstock (5) und einen Reitstock (19) eines Schleifapparats,
einen zweiten Schritt zum Ermitteln eines vorher festgelegten Hubbetrags der äußeren Umfangsfläche einer Nocke (10a) ean einem einzigen Punkt, um eine Standardphase der Nocke (10) zu messen, und
einen dritten Schritt zum Vorschieben und Zurückziehen des Drehschleifsteins (22) durch die NC-Steuerungseinheit (33) auf der Basis der Standardphase der Nocke (10a), die im zweiten Schritt gemessen wird, um die äußere Umfangsfläche der Nocken (10a, 10b --- 10n) zu schleifen,
wobei
Profildaten (P) der Nocken (10a, 10b --- 10n) auf der Nockenwelle (10), Daten (E) der Phasendifferenz zwischen den Nocken (10a, 10b --- 10n) und Daten (S) der axialen Abstände zwischen den Nocken (10a, 10b --- 10n) der NC-Steuerungseinheit (33) zugeführt werden, und
bei dem zweiten Schritt, wird eine der Nocken (10a) welche sich an der äußersten Seite und am engsten zum Spindelstock (5) befindet ausgewählt und der vorher festgelegte Hubbetrag der äußeren Umfangsfläche der einen Nocke (10a) gemessen.

2. Vorrichtung zum Schleifen einer Nockenwelle (10) mit einer Vielzahl an Nocken (10a, 10b --- 10n), die in vorbestimmten Abständen in einer axialen Richtung der Nockenwelle angeordnet sind,, wobei jede der Nocken ein Basiskreisteil (50) aufweist, welches einen konstanten Krümmungsradius aufweist, und einen Nockenbuckel (51), der zu umfangsmäßig gegenüberliegenden Enden des Basiskreisteils führt, die Vorrichtung weist eine Werkstücksdreheinrichtung (8) zum Drehen der Nockenwelle (10) um ihre eigene Achse auf, während die Nockenwelle (10) an deren gegenüberliegenden Enden durch einen Spindelstock (5) und einen Reitstock (19) gelagert ist, einen Drehschleifstein (22), der in der Lage ist, eine äußere Umfangsfläche der Nocken (10a, 10b --- 10n) zu schleifen, eine Schleifstein-Dreh- und Hin- und Her-Bewegungseinrichtung (18, 12), die in Bezug auf die äußere Umfangsfläche der Nocken (10a, 10b --- 10n) vorgeschoben und zurückgezogen werden kann, während der Drehschleifstein (22) drehbar angetrieben wird, eine Standardphasen-Messeinrichtung, um eine Standardphase eine der Nocken (10a) zu messen, und eine NC-Steuereinheit (33), um den Drehschleifstein (22) vorzuschieben und zurückzuziehen, um die äußere Umfangsfläche der Nocken (10a, 10b --- 10n) zu schleifen, auf der Basis des Standardphase der einen Nocke (10a), welche durch die Standardphasen-Messeinrichtung gemessen wird, **dadurch gekennzeichnet, dass** die Standardphasen-Messeinrichtung einen Standardphasensensor (35) aufweist, um einen vorher festgelegten Hubbetrag der äußeren Umfangsfläche einer der Nocken (10a) an einem einzigen Punkt zu ermitteln, wobei die eine Nocke an einer äußersten Seite und am engsten zum Spindelstock (5) angeordnet ist und Profildaten (P) der Nocken (10a, 10b --- 10n) auf der Nockenwelle (10), Daten (E) der Phasendifferenz zwischen den Nocken (10a, 10b --- 10n) und Daten (S) der axialen Abständen zwischen den Nocken (10a, 10b --- 10n) in die NC-Steuerungseinheit (33) eingegeben sind.

## Claims

1. Method for grinding a cam shaft (10) having a plurality of cams (10a, 10b, ..., 10n), being arranged in predetermined intervals in an axial direction of the cam shaft, wherein the method grinds an outer peripheral surface of the cams (10a, 10b, ..., 10n), each cam comprising a base circle portion (50) having a constant curvature radius and a cam lobe (51) leading to circumferentially opposite ends of the base circle portion, wherein the grinding of the cams is realized by a rotary grindstone (22) being advanced and retracted by a NC control unit (33) according to the profile of the cams (10a, 10b, ..., 10n), while the cam shaft (10) is being rotated around its axis,
the method comprising:
a first step of seating opposing ends of the cam shaft (10) by a headstock (5) and a tailstock (19) of a grinding apparatus, respectively,
a second step of detecting a predetermined lift amount of the outer peripheral surface of a cam (10a) at a single point so as to index a standard phase of the cam (10a), and
a third step of advancing and retracting the rotary grindstone (22) by the NC control unit (33) based on the standard phase of the cam (10a) indexed in the second step so as to grind the outer peripheral surface of the cams (10a, 10b, ··· 10n),
wherein
profile data (P) of the cams (10a, 10b, ···, 10n) on the cam shaft (10), data (E) of the phase difference between the cams (10a, 10b, ···, 10n) and data (S) of the axial intervals between the cams (10a, 10b, ···, 10n) are supplied to the NC control unit (33), and
in the second step one of the cams (10a) being located at the outermost side and nearest to the headstock (5) is selected and the previously set lift amount of the outer peripheral surface of the cam (10a) is indexed.

2. Device for grinding a cam shaft (10) having a plurality of cams (10a, 11b, ..., 10n), being arranged in predetermined intervals in an axial direction of the cam shaft, each cam comprising a base circle portion (50) having a constant curvature radius and a cam lobe (51) leading to circumferentially opposite ends of the base circle portion, wherein the device comprises a work-rotating means (8) for rotating the cam shaft (10) around its own axis while the cam shaft (10) is seated at opposing ends thereof by a headstock (5) and a tailstock (19), a rotary grindstone (22) capable of grinding the outer peripheral surface of the cams (10a, 10b, ···, 10n), a grindstone-rotating and reciprocally moving means (18, 12) capable of being advanced and retracted with respect to the outer peripherals surface of the cams (10a, 10b, ···, 10n), while driving said rotary grindstone (22) in rotation, a standard phase-indexing means for indexing a standard phase of one of the cams (10a), and a NC control unit (33) for advancing and retracting said rotary grindstone (22) to grind the outer peripheral surface of the cams (10a, 10b, ···, 10n) based on the standard phase of said on cam (10a) indexed by said standard phase-indexing means, **characterized in that** said standard phase-indexing means comprises a standard phase sensor (35) for detecting a previously set lift amount of the outer peripheral surface of one of the cams (10a) at a single point, wherein said one cam being located at an outermost side and nearest to the headstock (5) and profile data (P) of the cams (10a, 10b, ···, 10n) on the cam shaft (10), data (E) of the phase difference between the cams (10a, 10b, ···, 10n) and data (S) of the axial intervals between the cams (10a, 10b, ···, 10n) are supplied to the NC control unit (33).

## Revendications

1. Procédé de rectification d'un arbre à cames (10) comprenant plusieurs cames (10a, 10b --- 10n) disposées selon des écarts prédéfinis dans une direction axiale de l'arbre à cames, le procédé rectifiant une surface circonférentielle extérieure des cames (10a, 10b-10n), chacune des cames comprenant une partie circulaire de base (50) présentant un rayon de courbure constant, et un bossage de came (51) menant aux extrémités opposées en mesure de circonférence de la partie circulaire de base, la rectification des cames étant réalisée par une meule rotative (22) déplacée vers l'avant et vers l'arrière par une unité à commande numérique (33) en fonction du profil des cames (10a, 10b --- 10n), pendant que l'arbre à cames (10) est amené en rotation autour de son axe,
le procédé comprenant :
une première étape destinée à monter les extrémités opposées de l'arbre à cames (10) respectivement à travers une poupée porte-meule (5) et une contre-poupée (19) d'un appareil à rectifier,
une deuxième étape destinée à déterminer une valeur de levage prédéfinie de la surface circonférentielle extérieure d'une came (10a) sur un seul point, afin de mesurer une phase standard de la came (10a), et
une troisième étape destinée à déplacer vers l'avant et vers l'arrière la meule rotative (22) par l'intermédiaire de l'unité à commande numérique (33) sur la base de la phase standard de la came (10) mesurée au cours de la deuxième étape, afin de rectifier la surface circonférentielle extérieure des cames (10a, 10b --- 10n),
des données de profil (P) des cames (10a, 10b-10n) sur l'arbre à cames (10), des données (E) de la différence de phase entre les cames (10a, 10b --- 10n) et des données (S) des écarts axiaux entre les cames (10a, 10b --- 10n) étant amenées à l'unité à commande numérique (33), et
au cours de la deuxième étape, une des cames (10a) située sur le côté le plus extérieur et le plus près de la poupée porte-meule (5) étant choisie et la valeur de levage prédéfinie de la surface circonférentielle extérieure d'une des cames (10a) étant mesurée.

2. Dispositif de rectification d'un arbre à cames (10) comprenant une pluralité de cames (10a, 10b-10n) disposées selon des écarts prédéfinis dans une direction axiale de l'arbre à cames, chacune des cames comprenant une partie circulaire de base (50) présentant un rayon de courbure constant, et un bossage de came (51) menant aux extrémités opposées en mesure de circonférence de la partie circulaire de base, le dispositif comprenant un système de rotation de pièce (8) destiné à faire tourner l'arbre à cames (10) autour de son axe propre, pendant que l'arbre à cames (10) est monté sur ses extrémités opposées à travers une poupée porte-meule (5) et une contre-poupée (19), une meule rotative (22) en mesure de rectifier une surface circonférentielle extérieure des cames (10a, 10b-10n), un dispositif de déplacement en rotation et en va-et-vient de meule (18, 12) qui peut être déplacé vers l'avant et vers l'arrière par rapport à la surface circonférentielle extérieure des cames (10a, 10b-10n), pendant que la meule rotative (22) est entraînée en rotation, un dispositif de mesure de phase standard afin de mesurer une phase standard d'une des cames (10a), et une unité à commande numérique (33) afin de déplacer la meule rotative (22) vers l'avant et vers l'arrière afin de rectifier la surface circonférentielle extérieure des cames (10a, 10b-10n), sur la base de la phase standard d'une des cames (10a) mesurée par le dispositif de mesure de phase standard, **caractérisé en ce que** le dispositif de mesure de phase standard comprend un capteur de phase standard (35) afin de déterminer une valeur de levage prédéfinie de la surface circonférentielle extérieure d'une des cames (10a) sur un seul point, l'une des cames étant disposée sur un côté le plus extérieur et le plus près de la poupée porte-meule (5) et des données de profil (P) des cames (10a, 10b --- 10n) sur l'arbre à cames (10), des données (E) de la différence de phase entre les cames (10a, 10b --- 10n) et les données (S) des écarts axiaux entre les cames (10a, 10b --- 10n) étant introduites dans l'unité à commande numérique (33).
